# EUROPÄISCHE PATENTSCHRIFT

(11) **EP 2 352 634 B1**
(45) Veröffentlichungstag und Bekanntmachung des Hinweises auf die Patenterteilung: **15.10.2014**
(21) Anmeldenummer: 09763978.5
(22) Anmeldetag: 04.12.2009
(51) Int. Cl.: B29C 65/00, B29C 65/02, B01L 3/14, B29C 65/08, B29C 65/16, G01N 35/10

(54) **VERFAHREN ZUM HERSTELLEN EINES REAGENZBEHÄLTERVERBUNDS UND REAGENZBEHÄLTERVERBUND**
METHOD FOR MANUFACTURING A REAGENT CONTAINER UNIT AND REAGENT CONTAINER UNIT
PROCÉDÉ DE FABRICATION D'UN ENSEMBLE DE RÉCIPIENTS DE RÉACTIF ET ENSEMBLE DE RÉCIPIENTS DE RÉACTIF

(30) Priorität: 05.12.2008 EP 08021175
(43) Veröffentlichungstag der Anmeldung: 10.08.2011
(73) Patentinhaber: F. Hoffmann-La Roche AG, 4070 Basel (CH); Roche Diagnostics GmbH, 68305 Mannheim (DE)
(72) Erfinder: SATTLER, Stephan, 82319 Starnberg (DE); KRAEMER, Reinhold, 82380 Peissenberg (DE)
(74) Vertreter: Tiesmeyer, Johannes
(86) Internationale Anmeldenummer: PCT/EP2009/066422
(87) Internationale Veröffentlichungsnummer: WO 2010/063834

(56) Entgegenhaltungen:
- EP-A- 0 692 308
- EP-A2- 1 538 447
- WO-A1-2005/110872
- WO-A1-2008/009821
- FR-A- 2 710 327
- FR-A1- 2 261 931
- FR-A1- 2 532 240
- FR-A1- 2 615 786
- FR-A1- 2 697 811
- JP-A- 2002 037 262
- NL-A- 7 802 703
- US-A- 5 251 778
- US-A1- 2002 110 623
- US-A1- 2005 170 356
- US-A1- 2008 035 636

## Beschreibung

Die vorliegende Erfindung betrifft ein Verfahren zum Herstellen eines Reagenzbehälterverbunds aus Kunststoff, umfassend:
- Zusammenstellen einer Gruppe bestimmter Reagenzbehälter und
- Dauerhaftes Verbinden der Reagenzbehälter zu dem Reagenzbehälterverbund durch wenigstens einen Ultraschallschweißvorgang, wobei zumindest einer der bestimmten Reagenzbehälter vor dem Verbinden zum Reagenzbehälterverbund mit einem Reagenz befüllt worden ist.

Derartige Reagenzbehälterverbunde werden in der klinischen Analytik in automatisch arbeitenden Analysegeräten eingesetzt. In diesen Analysegeräten müssen eine Vielzahl von Reagenzbehältern maschinell gehandhabt werden, von denen Gruppen bereits während des Herstellungsprozesses aus praktischen Gründen zu gemeinsam als Einheit handhabbaren Reagenzbehälterverbunden zusammengestellt werden. Beispielsweise umfasst ein Reagenzbehälterverbund die Gruppe bestimmter Reagenzbehälter, die mit den für einen vorbestimmten Analysevorgang notwendigen Reagenzien bzw. Hilfssubstanzen befüllt wurde. Soll dieser Analysevorgang mit einem Analysegerät durchgeführt werden, genügt es, nur diesen Reagenzbehälterverbund anstatt mehrere einzelne Reagenzbehälter in das Analysegerät einzusetzen.

In der Regel sind die einzelnen Reagenzbehälter eines Reagenzbehälterverbunds vor dem Zusammenstellen bereits mit Reagenzien befüllt. Es ist aber nicht ausgeschlossen, dass ein Reagenzbehälter des Reagenzbehälterverbunds beim Zusammenstellen noch unbefüllt ist. Es kann auch notwendig sein, einzelne Reagenzbehälter vor dem Befüllen zu beschichten oder aus einem anderen Material wie die anderen Reagenzbehälter des Reagenzbehälterverbunds herzustellen. Auch wenn ein beschichteter Reagenzbehälter erst nach dem Verbinden des Reagenzbehälterverbunds mit der Reagenz befüllt wird, erfolgt das Beschichten vorzugsweise bereits vor dem Zusammenstellen der Reagenzbehälter.

Normalerweise werden die verschiedenen Reagenzien, die für einen bestimmten Reagenzbehälterverbund vorgesehen sind, an unterschiedlichen Orten oder zu unterschiedlichen Zeiten hergestellt. Würde ein bereits originär einstückiger, mehrere Reagenzbehälter umfassender Reagenzbehälterverbund mit diesen Reagenzien zu befüllen sein, so müsste er bereits teilweise befüllt von einem Ort zum anderen transportiert oder teilweise befüllt gelagert werden. Einfacher ist es, einzelne Reagenzbehälter zu transportieren und zu lagern.

Da die Zusammensetzung einer bestimmten Reagenz herstellungsbedingt schwanken kann, kann es u. U. notwendig sein, dass die Reagenzien eines Reagenzbehälterverbunds aufeinander abgestimmt werden. Wieder ist es einfacher, einzelne Reagenzbehälter zu verwenden, die nach dem Befüllen zu einem Reagenzbehälterverbund miteinander verbunden werden. Dabei wird eine erste Reagenz hergestellt und ohne Zwischenlagerung in einzelne Reagenzbehälter gefüllt. Nach genauer Analyse der ersten Reagenz wird eine auf die erste Reagenz abgestimmte (kalibrierte) zweite Reagenz hergestellt, die ohne Zwischenlagerung in weitere einzelne Reagenzbehälter gefüllt wird. Einer der mit der ersten Reagenz befüllten Reagenzbehälter wird dann mit einem der mit der zweiten Reagenz befüllten Reagenzbehälter zu einem Reagenzbehälterverbund verbunden, der die beiden aufeinander abgestimmten Reagenzien enthält.

Diese Beispiele zeigen, dass es aus logistischen Gründen ungünstig ist, eine dem Reagenzbehälterverbund entsprechende Behälteranordnung mit mehreren Kammern einstückig herzustellen und danach die Kammern mit unterschiedlichen Reagenzien bzw. Hilfssubstanzen zu befüllen.

Es ist daher wesentlich praktischer, die Reagenzien in gesonderte Reagenzbehälter zu füllen und diese Behälter dann je nach Bedarf zu den nötigen Reagenzbehälterverbunden zusammenzustellen und zu verbinden. Unter den Begriff Reagenz sollen im Rahmen der vorliegenden Anmeldung auch Hilfsubstanzen, wie etwa Trägerpartikel, z. B. Beads, fallen.

Bei einem aus der EP 0 692 308 A2 bekannten Herstellungsverfahren werden eine große Stückzahl von einzelnen Reagenzbehältern aus Polyolefinen, wie etwa Polypropylen oder Polyethylen, hergestellt und anschließend mit unterschiedlichen Reagenzien befüllt. Die bestimmten Reagenzbehälter, die für einen Reagenzbehälterverbund vorgesehen sind, werden mit einem Fügerahmen mechanisch verbunden. Der Fügerahmen und die Reagenzbehälter weisen dazu Verbindungselemente in der Form von Schnappverschlusselementen auf. Beim Verbindungsvorgang wird jeder der Reagenzbehälter an die für ihn vorbestimmte Stelle im Fügerahmen gesteckt, die Schnappschlusselemente rasten ein und verbinden den Reagenzbehälter mit dem Fügerahmen. Das zuverlässige mechanische Verbinden der Reagenzbehälter mit dem Fügerahmen ist ein aufwändiger Arbeitsschritt. Der Fügerahmen ist ein relativ kompliziert geformtes, gesondertes Bauteil, dessen Herstellung aufwändig und kostenintensiv ist.

Ferner ist es nachteilig, dass der Fügerahmen den Platzbedarf des Reagenzbehälterverbunds im betreffenden Analysegerät vergrößert, da er die Außenkonturdimensionen des Reagenzbehälterverbunds wesentlich bestimmt.

Aus der FR 2710327 ist ein Verfahren der Eingangs genannten Art zur Zusammenfassung von Behältern, wie sie zur Verpackung von Pastillen, Tabletten, Granulaten und Kapseln etc. verwendet werden, offenbart. Die Behälter werden zu einem Verbund zusammengefasst, indem sie zunächst so positioniert werden, dass Randausnehmungen einander benachbarter Behälter direkt einander gegenüberliegen. Sodann erfolgt ein Ultraschallverschweißen der Behälter, wobei Sonotrodenfinger in die einander gegenüberliegenden Randausnehmungen einander benachbarter Behälter eingeführt werden, so dass sie dort vorpräparierte Materialanhäufungen miteinander verschweißen. Es kommt bei diesen bekannten Verfahren darauf an, dass die so verbundenen Behälter auf einfache Weise mit geringem Kraftaufwand wieder voneinander getrennt werden können. Eine solche Schweißverbindung ist mit relativ geringem und daher für die Behälter unkritischem Energieeintrag realisierbar.

Aufgabe der Erfindung ist es daher, ein Verfahren der eingangs genannten Art zum Herstellen von Reagenzbehälterverbunden so zu gestalten, dass besonders feste Ultraschallschweißverbindungen zwischen den Reagenzbehältern hergestellt werden können, ohne darin bereits befindliche Reagenzien zu beeinträchtigen.

Diese Aufgabe wird gelöst durch ein Verfahren zum Herstellen eines Reagenzbehälterverbunds aus insbesondere thermoplastischem Kunststoff, umfassend:
- Zusammenstellen einer Gruppe bestimmter Reagenzbehälter und
- Dauerhaftes Verbinden der Reagenzbehälter zu dem Reagenzbehälterverbund durch wenigstens einen Ultraschallschweißvorgang , wobei zumindest einer der bestimmten Reagenzbehälter vor dem Verbinden zum Reagenzbehälterverbund mit einem Reagenz befüllt worden ist, wobei wenigstens zwei miteinander zu verbindende Reagenzbehälter verwendet werden, welche jeweils einen plattenförmigen Verbindungswandabschnitt mit einer nach außen hervorstehenden Plattenkante aufweisen, wobei die zwei Reagenzbehälter vor dem Verbinden so angeordnet werden, dass die Verbindungswandabschnitte zumindest im Bereich der Plattenkanten aneinander anliegen oder mit geringem Abstand im Wesentlichen parallel zueinander verlaufen, wobei die zwei Reagenzbehälter an ihren Verbindungswandabschnitten durch Ultraschallschweißen mit einer Sonotrode verbunden werden, deren Schweißstempel die zwei Plattenkanten der Verbindungswandabschnitte der zwei Reagenzbehälter beim Schweißvorgang gemeinsam umgreift.

Unter dem Begriff der dauerhaften Verbindung von zwei Reagenzbehältern wird dabei verstanden, dass die Verbindung ohne spezielle Trennwerkzeuge, etwa Messer, Sägen oder Zangen, nicht gelöst werden kann, bzw. nur unter Einsatz von solcher Kraft gelöst werden kann, dass zu erwarten ist, dass dabei wenigstens einer der Reagenzbehälter selbst zerstört oder zumindest in funktionsbeeinträchtigender Weise beschädigt wird. Auf diese Weise kann ein unbeabsichtigtes Lösen eines Reagenzbehälters aus dem Reagenzbehälterverbund etwa durch Abbrechen beim Transport verhindert werden.

Wie vorstehend beschrieben ist es aus logistischen und verfahrensökonomischen Gründen vorteilhaft, die einzelnen Reagenzien nach ihrer Herstellung möglichst unmittelbar in einzelne Reagenzbehälter zu füllen und die befüllten Reagenzbehälter anschließend zu einem Reagenzbehälterverbund zusammenzufügen.

Unmittelbar nach dem Befüllen können die Reagenzbehälter verdeckelt werden, so dass die befüllten und verschlossenen Reagenzbehälter zunächst gelagert und zu einem späteren Zeitpunkt, etwa wenn alle für einen bestimmten Test benötigten Reagenzien produziert und abgefüllt sind, zu dem Reagenzbehälterverbund zusammengefügt werden können.

Vorzugsweise werden alle Reagenzbehälter in befülltem und ggf. verdeckeltem Zustand zu dem Reagenzbehälterverbund zusammengefügt, es ist jedoch auch denkbar, einzelne Reagenzbehälter erst nach dem Zusammenfügen zu befüllen.

Es hat sich in Versuchen gezeigt, dass das erfindungsgemäß vorgeschlagene, dauerhafte Verschweißen gerade auch von befüllten oder beschichteten Reagenzbehältern zu einem Reagenzbehälterverbund die Reagenzbehälter nicht kritisch beschädigt oder undicht werden lässt. Auch hat der Schweißvorgang thermisch empfindliche Reagenzien in den Behältern nicht verändert bzw. in ihrer Wirksamkeit beeinträchtigt. Dies war ohne Weiteres nicht zu erwarten.

Da in der klinischen Analytik verwendete Reagenzbehälterverbunde, in denen sich Reagenzien für einen bestimmten Analysevorgang befinden, quantitativ genau aufeinander abgestimmte, d.h. kalibrierte Reagenzien benötigen, ist es vorteilhaft, wie vorstehend beschrieben, die einzelnen Reagenzbehälter mit aufeinander kalibrierten Reagenzien zu befüllen, also vor dem Verbinden der Reaganzbehälter wenigstens einen anderen der bestimmten Reagenzbehälter mit wenigstens einem anderen Reagenz zu befüllen, welches auf das eine Reagenz kalibriert ist.

Alternativ oder zusätzlich kann vor dem Abfüllen der Reagenzien in die einzelnen Reagenzbehälter und dem Verschweißen der Reagenzbehälter zum Reagenzbehälterverbund eine Qualitätskontrolle der einzelnen Reagenzien durchgeführt werden.

Das Kalibrieren von dem wenigstens einen anderen Reagenz auf das eine Reagenz kann vorteilhaft in das erfindungsgemäße Verfahren integriert werden indem es vor dem Befüllen des wenigstens einen anderen Reagenzbehälters durchgeführt wird.

Um den Einsatz des Reagenzbehälterverbundes mit aufeinander kalibrierten Reagenzien in einem Analysensystem zu erleichtern kann vorgesehen sein, dass bei dem Kalibrieren von dem wenigstens einen anderen Reagenz auf das wenigstens eine Reagenz Kalibrationsdaten erfasst und der Reagenzbehälterverbund mit den Kalibrationsdaten in einer Form versehen wird, die von einem Verwender oder automatisch von dem Analysensystem auslesbar ist.

Sollen die Kalibrationsdaten vom Verwender ausgelesen und etwa manuell in das Analysensystem eingegeben werden, kann die Information in Form eines separaten, dem Reagenzbehälterverbund beigelegten oder in geeigneter Weise auf dem Reagenzbehälterverbund aufgebrachten Datenblattes bzw. in elektronischer Form auf einem Datenträger vorgesehen sein.

Um ein automatisches Auslesen der Kalibrationsdaten durch das Analysensystem zu ermöglichen, können diese beispielsweise in Form eines Barcodes oder RFID-Transponders auf dem Reagenzbehälterverbund aufgebracht sein.

Diese "Etikettierung" des Reagenzbehälterverbundes kann in vorteilhafter Weise auf der gleichen Anlage stattfinden, auf der die Reagenzbehälter zusammengefügt werden.

Alternativ oder zusätzlich können Chargendaten von einem oder mehreren der Reagenzien in der vorstehend beschriebenen Weise erfasst und der Reagenzbehälterverbund damit versehen werden.

Insbesondere, wenn bei dem Schweißvorgang wenigstens eine punktuelle Schweißverbindung entsteht, so wie es für eine bevorzugte Weiterbildung der Erfindung vorgeschlagen ist, kann der Wärmeeintrag in den Behälter gering gehalten werden. Mit einer punktuellen Schweißverbindung, bzw. einem Schweißpunkt, ist eine Schweißverbindung gemeint, die auf ein lokales Gebiet begrenzt ist, allerdings nicht notwendigerweise im streng mathematischen Sinn punkt- oder kreisförmig sein muss. Zu denken wäre in diesem Fall beispielsweise auch an im Wesentlichen ellipsenförmige oder rechteckige Schweißverbindungen.

Alternativ dazu könnte bei dem Schweißvorgang anstelle einer punktuellen Schweißverbindung eine Schweißnaht zum Verbinden der Reagenzbehälter erzeugt werden, die eine größere Verbindungsstabilität bereitstellt, deren Schweißvorgang im Gegenzug aber die zu verbindenden Behälter gegebenenfalls etwas stärker beansprucht als eine punktuelle Schweißverbindung.

Wie nachstehend genauer beschrieben wird, können die Reagenzbehälter jedoch so ausgestaltet sein, dass auch bei der Herstellung von Schweißnähten der Wärmeeintrag zumindest in den Bereich des Reagenzbehälters, der die eigentliche Reagenzaufnahme bildet, so gering gehalten wird, dass Beschädigungen der Reagenzaufnahmen und darin eingefüllter Reagenzien beim Schweißvorgang vermieden werden können.

Punktuelle Schweißverbindungen weisen noch einen weiteren Vorteil auf. Bei bestimmten Analysevorgängen ist daran gedacht, dass einer der Reagenzbehälter von einem bestimmten Reagenzbehälterverbund abgetrennt wird, so dass er unabhängig vom Rest des Reagenzbehälterverbunds an einen anderen Ort transportiert werden kann. Dazu müssen die den Reagenzbehälter mit dem Rest des Reagenzbehälterverbunds verbindenden Schweißverbindungen gelöst werden. Einzelne punktuelle Schweißverbindungen weisen eine geringere Verbindungsstabilität als eine Schweißnaht auf und können leichter, beispielsweise durch ein einfaches Trennwerkzeug aufgetrennt werden.

Vorzugsweise werden wenigstens zwei der Reagenzbehälter über wenigstens zwei voneinander beabstandete Schweißverbindungen miteinander verbunden. Dies stellt sicher, dass auch dann eine hinreichend stabile Verbindung der beiden Behälter gewährleistet ist, wenn eine der beiden Schweißverbindungen beschädigt werden sollte.

Unter Umständen kann es günstig sein, wenn wenigstens zwei der Reagenzbehälter durch mehr als zwei voneinander beabstandete Schweißverbindungen, etwa durch Schweißverbindungen an einander entgegengesetzten Seiten des Reagenzbehälterverbunds, miteinander verbunden werden.

Der Schweißvorgang ist ein Ultraschallschweißvorgang. Durch Experimente der Anmelderin hat sich herausgestellt, dass beim Ultraschallschweißen durch das Andrücken der Sonotrode auf den Bereich der beiden zu verbindenden Reagenzbehälter der aufgeweichte Kunststoff derart verfließt, dass ohne weitere Maßnahmen ein die beiden Reagenzbehälter verbindender Steg entsteht, insbesondere auch dann, wenn die beiden Reagenzbehälter im Bereich der Verbindungsstelle nicht dicht aneinander anliegen, sondern einen geringen Abstand voneinander haben.

Um gewünschtenfalls zusätzliches Kunststoffmaterial zum Verbinden der wenigstens zwei Reagenzbehälter bereitzustellen, kann es vorgesehen sein, dass an wenigstens einem Reagenzbehälter eine Materialverdickung vorgesehen ist, die bei dem Schweißvorgang verläuft. Auf diese Weise wird auch sichergestellt, dass der Bereich, in dem geschweißt wird, durch das Fließen des thermisch aufgeweichten Materials nicht dünner wird als der Rest der Behälterwand.

Um den beim Ultraschallschweißen entstehenden Wärmeeintrag zumindest in den Bereich des Reagenzbehälters, der in direktem Kontakt mit in den Behälter eingefülltem Reagenz steht, möglichst gering zu halten, ist es vorgesehen, dass wenigstens zwei miteinander zu verbindende Reagenzbehälter verwendet werden, welche jeweils einen plattenförmigen Verbindungswandabschnitt mit einer nach aussen hervorstehenden Plattenkante aufweisen, wobei die zwei Reagenzbehälter vor dem Verbinden so angeordnet werden, dass die Verbindungswandabschnitte zumindest im Bereich der Plattenkanten aneinander anliegen oder mit geringem Abstand im Wesentlichen parallel zueinander verlaufen, und wobei die zwei Reagenzbehälter durch Ultraschallschweißen mit einer Sonotrode verbunden werden, deren Schweißstempel die zwei Plattenkanten der Verbindungswandabschnitte der zwei Reagenzbehälter beim Schweißvorgang gemeinsam umgreift. Dass die Plattenkanten nach aussen hervorstehen soll dabei bedeuten, dass sie insbesondere von der eigentlichen Reagenzaufnahme weg hervorstehen und somit nicht direkt in Kontakt mit Reagenzien stehen. Der Abstand der verschweissten Bereiche etwa zu flüssigkeitsführenden Wandbereichen eines befüllten Reagenzbehälters kann dadurch vergrößert und der Wärmeeintrag in die Reagenzien so minimiert werden, auch wenn durch entsprechend lang ausgebildete Wandabschnitte und Schweißstempel sehr stabile Schweißnähte erzeugt werden können.

Ein weiterer Vorteil besteht darin, dass durch das Verschweißen hervorstehender Plattenkanten anstelle eines direkten Verschweißens flüssigkeits- bzw. allgemein reagenzführender Wandabschnitte der Behälterwand das Risiko, durch das Verschweißen Undichtigkeiten im Behälter zu erzeugen, drastisch vermindert bzw. ausgeschlossen werden kann.

Dass die Verbindungswandabschnitte mit geringem Abstand parallel zueinander verlaufen ist so zu verstehen, dass ihr Abstand nur so groß ist, dass die zwei Plattenkanten der Verbindungswandabschnitte gemeinsam von dem Schweißstempel der Sonotrode umgriffen und so durch Ultraschallschweißen miteinander verbunden werden können.

Der Schweißstempel ist vorzugsweise an seinem die Plattenkanten umgreifenden Längsende in Form eines verrundeten V ausgebildet, so dass durch das Ausüben von Druck die beiden Verbindungswandabschnitte zu der Symmetrieebene des Schweißstempels hin und damit aufeinander zu gedrückt werden, was die Vermengung des erwärmten Kunststoffmaterials und damit die Festigkeit der beim Ultraschallschweißen erzeugten Verbindung erhöht.

Weiterhin wird durch diese Form der Sonotrode die Fügestelle verrundet ausgebildet und beim Schweißen entstehende Grate bzw. Materialüberschüsse stehen nicht oder möglichst wenig von der Oberfläche des Reagenzbehälterverbundes hervor, was die automatische Handhabung des Reagenzbehälterverbundes vereinfacht und das Verletzungsrisiko eines Verwenders minimiert, der mit diesem Reagenzbehälterverbund hantiert.

Auch ist es möglich, dass einer der zu verschweißenden Reagenzbehälter mehr als eine Kammer für Reagenzien aufweist. Der Reagenzbehälter mit mehr als einer Kammer könnte dabei bei einem ersten Schweißvorgang entstehen, bei dem zwei Reagenzbehälter mit jeweils einer Kammer miteinander verschweißt werden. Bei einem weiteren Schweißvorgang kann dann der Reagenzbehälter mit mehr als einer Kammer mit einem weiteren Reagenzbehälter zu dem Reagenzbehälterverbund verbunden werden.

Während eines Analysevorgangs in einer der eingangs genannten Analysegeräte werden in Öffnungen der Reagenzbehälter üblicherweise Pipettiereinrichtungen oder auch eine Mischvorrichtung in der Form eines Quirls eingefahren. Insbesondere dann, wenn der Quirl im Durchmesser nur unwesentlich kleiner als die Öffnung des entsprechenden Reagenzbehälters ist, ist eine genaue Positionierung der Öffnungen der Reagenzbehälter in Bezug auf das Analysegerät erforderlich. Werden die Reagenzbehälter beim Verbinden lediglich aneinandergedrückt, so kann die Gesamtbreite des Reagenzbehälterverbunds durch herstellungsbedingte Toleranzen der Breite der einzelnen Reagenzbehälter schwanken. Werden derartig unterschiedlich breite Reagenzbehälterverbunde in einer Aufnahme des Analysegeräts angeordnet, so kann, insbesondere bei einem relativ kurz geratenen Reagenzbehälterverbund, das Spiel des Reagenzbehälters innerhalb der Aufnahme dazu führen, dass die Öffnung des Reagenzbehälters, in den der Quirl eingefahren werden soll, so weit von ihrer Sollposition entfernt ist, dass der Quirl den Rand der Öffnung berührt, wodurch der Quirl und/oder die Öffnung beschädigt werden können.

Um dieses Problem zu umgehen, wird vorgeschlagen, dass die Reagenzbehälter in einer Positionierungseinrichtung relativ zu Positionierungsanschlägen dieser Positionierungseinrichtung zusammengestellt und miteinander verschweißt werden. Die Positionierungsanschläge weisen dazu einen vordefinierten Abstand auf, der die Gesamtbreite des entstehenden Reagenzbehälterverbunds bestimmt. Die beiden äußeren Reagenzbehälter eines Reagenzbehälterverbundes werden dazu vor dem Schweißvorgang zum Positionieren an den Positionierungsanschlägen angelegt. Der entstehende Reagenzbehälterverbund erhält eine vordefinierte Breite und die Öffnungen der beiden äußeren Reagenzbehälter können in einem Analysegerät genau positioniert werden.

Gegenstand der Erfindung ist auch ein Reagenzbehälterverbund mit den Merkmalen des Patentanspruchs 7, wie er z.B. nach dem erfindungsgemäßen Verfahren hergestellt werden kann.

Um die Beeinträchtigung der in die Reagenzienbehälter eingefüllten Reagenzien durch beim Ultraschallschweißen erzeugte Wärme zu verhindern oder zu minimieren, ist es vorgesehen, dass der Reagenzbehälterverbund wenigstens zwei miteinander verbundene Reagenzbehälter aufweist, welche jeweils wenigstens einen plattenförmigen Verbindungswandabschnitt mit einer nach aussen hervorstehenden Plattenkante aufweisen, wobei die zwei Reagenzbehälter im Reagenzbehälterverbund mit ihren Verbindungswandabschnitten zumindest im Bereich der jeweiligen Plattenkanten aneinander anliegen oder mit geringem Abstand im Wesentlichen parallel zueinander verlaufen und wobei die zwei Reagenzbehälter an den zwei Verbindungswandabschnitten durch wenigstens eine Schweißverbindung, insbesondere eine Schweißnaht dauerhaft miteinander verbunden sind.

Die vorliegende Erfindung wird nachfolgend mit Bezug auf die beiliegenden Zeichnungen anhand einer bevorzugten Ausführungsform beschrieben. Es zeigt:
- Fig. 1: einen nicht der vorliegenden Erfindung entsprechenden Reagenzbehälterverbund mit direkt miteinander verschweißten Reagenzbehältern in perspektivischer Ansicht;
- Fig. 2: eine Ansicht des Reagenzbehälterverbunds aus Fig. 1 von unten;
- Fig. 3: einen Querschnitt durch den Reagenzbehälterverbund aus Fig. 1 mit alternativ ausgestalteten Schweißstellen während eines Schweißvorgangs;
- Fig. 4: den Reagenzbehälterverbund aus Fig. 1 in einer Positionierungseinrichtung während eines Ultraschallschweißvorgangs in perspektivischer Ansicht;
- Fig. 5: drei schematisch dargestellte Ausführungsformen von Schweißstempeln für eine Sonotrode;
- Fig. 6: einen Querschnitt durch den in der Positionierungseinrichtung angeordneten Reagenzbehälter aus Fig. 4;
- Fig. 7: den Reagenzbehälterverbund aus Fig. 1 zusammen mit zwei Messern zum Abtrennen eines Reagenzbehälters;
- Fig. 8: eine Ausführungsform eines Reagenzbehälters mit abgerundeter Bodenfläche;
- Fig. 9: eine weitere Ausführungsform eines Reagenzbehälterverbunds aus gemeinsam in einem Ständer angeordneten Reagenzbehäl tern;
- Fig. 10: eine weitere Ausführungsform eines Ständers, der gleichzeitig zum Positionieren der in ihm angeordneten Reagenzbehälter dient.
- Fig. 11: eine Ausführungsform von Reagenzbehältern, die durch Ultraschallschweissen mit einer ebenfalls dargestellten speziellen Mehrfachsonotrode zu einer Ausführungsform eines Reagenzbehälterverbunds gemäß der vorliegenden Erfindung verschweißt werden können;
- Fig. 12: den Gegenstand von Figur 11 nach Positionieren der Reagenzbehälter zum Ultraschall-Verschweißen;
- Fig. 13: den Gegenstand von Figur 12 während des Ultraschall-Verschweißens;
- Fig. 14: den Gegenstand von Figur 13 nach dem UltraschallVerschweißen;
- Fig. 15: eine Ausschnittvergrößerung von Figur 14; und
- Fig. 16: eine andere perspektivische und vergrößerte Darstellung eines der Schweißstempel der zur Herstellung des in Figur 14 dargestellten erfindungsgemäßen Reagenzbehälterverbunds verwendeten Mehrfachsonotrode.

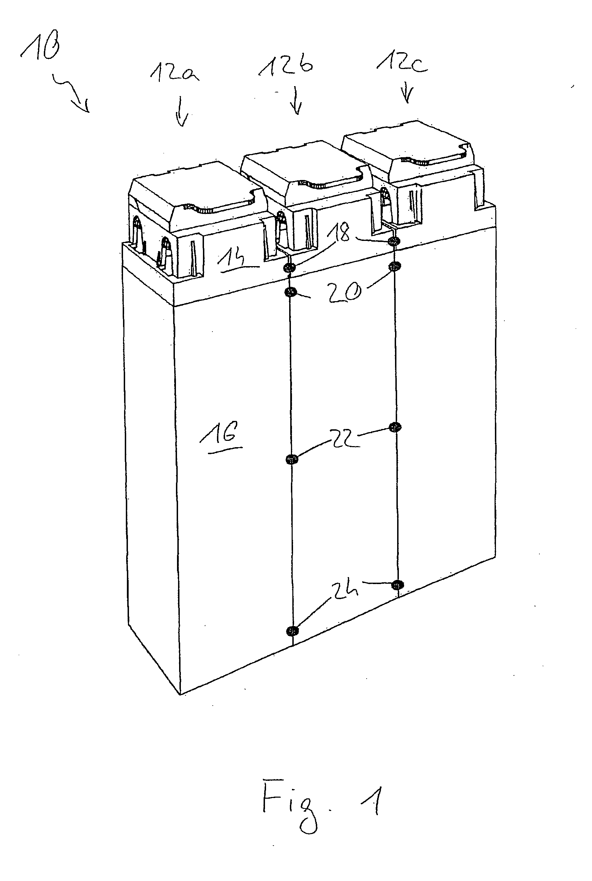

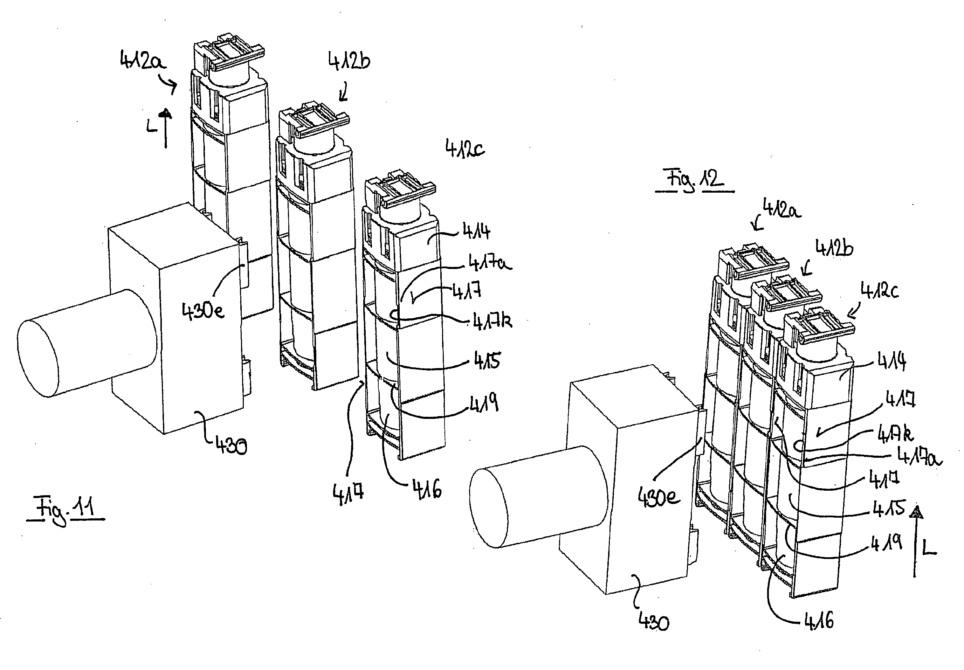

Fig. 1 zeigt einen allgemein mit dem Bezugszeichen 10 bezeichneten Reagenzbehälterverbund. Dieser Reagenzbehälterverbund entspricht nicht der vorliegenden Erfindung, weist aber hinsichtlich des Bestimmungszweckes und hinsichtlich der Handhabung, der Funktion und des Materials der Reagenzienbehälter und deren Zusammenstellung zur Herstellung des Reagenzienbehälterverbundes weitgehende Übereinstimmung mit einem Reagenzienbehälterverbund nach der Erfindung auf, wie er in den Fig. 11 - 15 illustriert ist. Der Reagenzbehälterverbund 10 umfasst die Reagenzbehälter 12a, 12b, 12c, die jeweils aus einem Deckelteil 14 und einem Unterteil 16 bestehen und z. B. aus Polypropylen hergestellt sind. Vor dem Zusammenstellen der Gruppe 12a, 12b, 12c von Reagenzbehältern wurden diese individuell vorbehandelt, etwa indem sie mit unterschiedlichen Reagenzien oder Hilfssubstanzen befüllt wurden.

Bei einem speziellen Reagenzbehälterverbund bestehen die Reagenzbehälter 12a und 12b aus eingefärbtem Polypropylen, das einen Lichtschutz für Reagenzien im Inneren der Reagenzbehälter 12a, 12b bietet. Der zur Aufnahme von Beads bestimmte Reagenzbehälter 12c besteht aus ungefärbtem Polypropylen, das besonders für Beads geeignete Oberflächeneigenschaften aufweist. Der Behälter 12c könnte auch eine Innenbeschichtung aufweisen, die das Anhaften von Beads an der Innenfläche des Behälter weiter vermindert.

Das Deckelteil 14 umfasst einen Deckel, der von einem Analysegerät angehoben werden kann, so dass der jeweilige Reagenzbehälter 12a, 12b, 12c geöffnet wird. Die Reagenzbehälter 12a, 12b, 12c weisen einen im Wesentlichen quadratischen Querschnitt auf und sind zu dem Reagenzbehälterverbund 10 verbunden, der einen im Wesentlichen rechteckigen Querschnitt mit der gleiche Breite wie einer der Reagenzbehälter 12a, 12b, 12c, aber dessen dreifache Breite hat.

Die Reagenzbehälter 12a, 12b, 12c grenzen an sich in Breitenrichtung überdeckenden Seitenflächen aneinander an. In der Fig. 1 sind verschiedene mögliche punktuelle Schweißverbindungen bzw. Schweißpunkte 18, 20, 22, 24 an den diesen Seitenflächen zugeordneten Kanten der Reagenzbehälter 12a, 12b, 12c dargestellt. Die Schweißpunkte 18, 20, 22, 24 müssen aber nicht notwendigerweise alle verwirklicht sein. Beispielsweise könnten zwei der Reagenzbehälter 12a, 12b, 12c lediglich an ihren Deckelteilen 14 durch einen Schweißpunkt 18 direkt miteinander verbunden werden. Die Schweißverbindung kann aber auch am oberen Ende des Unterteils 16 durch den Schweißpunkt 20, in der Mitte durch den Schweißpunkt 22 oder am unteren Ende durch den Schweißpunkt 24 erfolgen.

Auf der der in der Fig. 1 nicht sichtbaren gegenüberliegenden Seite des Reagenzbehälterverbunds 10 können den den Schweißpunkten 18, 20, 22, 24 gegenüberliegende entsprechende Schweißpunkte zum Verbinden der drei Reagenzbehälter 12a, 12b, 12c vorhanden sein.

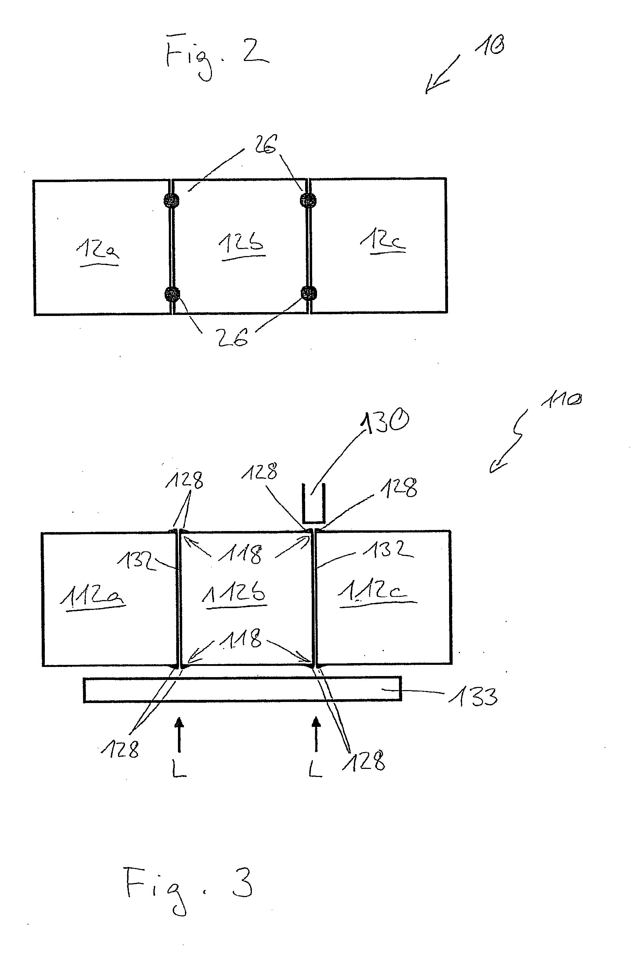

Fig. 2 zeigt den Reagenzbehälterverbund 10 von unten. Die Reagenzbehälter 12a, 12b und 12c können auch an ihrer Unterseite durch Schweißpunkte 26 direkt miteinander verbunden werden. Dabei erfolgt der Schweißvorgang an den aneinanderliegenden Kanten der Unterseiten der Reagenzbehälter 12a, 12b und 12c.

Soweit in den folgenden Figuren Ausführungsbeispiele von Reagenzienbehälterverbünden dargestellt sind, sind deren Bauteile mit Bezugszeichen versehen, die aus den Bezugszeichen der entsprechenden Bauteile des ersten Ausführungsbeispiels durch Addition der Zahlen 100, 200, usw. hervorgehen. Die weiteren Ausführungsbeispiele werden nur insoweit beschrieben, als sie sich vom ersten Ausführungsbeispiel unterscheiden, auf dessen vorstehende Beschreibung ansonsten verwiesen wird.

In der Fig. 3 ist ein Querschnitt durch drei zum Verbinden angeordnete Reagenzbehälter 112a, 112b und 112c einer zu den Reagenzbehältern 12a, 12b, 12c aus der Fig. 1 alternativen Ausführungsform dargestellt. Während die Reagenzbehälter 12a, 12b, 12c im Bereich der Verbindungsstellen 18, 20, 22, 24, 26 aus im Wesentlichen plattenförmig gebildeten Kunststoffwänden bestehen, weisen die Reagenzbehälter 112a, 112b, 112c dort, wo ein Schweißvorgang erfolgen soll, Materialverdickungen 128 im Bereich der Verbindungsstellen 118 auf. Die für die Bildung der beiden Längsenden des entstehenden Behälterverbunds 110 vorgesehenen Reagenzbehälter 112a und 112c weisen dabei auf Höhe des Querschnitts zwei Materialverdickungen, der dazwischen befindliche Reagenzbehälter 112b vier Materialverdickungen auf. Es ist auch möglich, dass im Bereich der Verbindungsstelle lediglich einer der an dieser Stelle zu verbindenden Reagenzbehälter eine Materialverdickung aufweist.

Im oberen Bereich der Fig. 3 ist dargestellt, wie die Reagenzbehälter 112b und 112c mit einem Ultraschallschweißvorgang verbunden werden. Eine Sonotrode 130, die beispielsweise durch ein Piezoelement zu Hochfrequenzschwingungen angeregt ist, wird auf das Kunststoffmaterial der Reagenzbehälter 112b, 112c gedrückt. Durch die hochfrequenten Schwingungen der Sonotrode erwärmt sich der thermoplastische Kunststoff, aus dem die beiden Behälter 112b, 112c hergestellt sind, und wird flüssig. Durch den Druck der Sonotrode 130 auf die Reagenzbehälter 112b und 112c vermengt sich das Material des Reagenzbehälters 112b mit dem des Reagenzbehälters 112c, so dass es zu einem Verschmelzen kommt. Nach Abschalten der Ultraschallschwingungen verbleibt die Sonotrode 130 gemäß einer Verfahrensvariante noch einige Zeit auf der Verbindungsstelle 118, bis das Kunststoffmaterial erstarrt ist. Die Schweißzeit beträgt z. B. etwa 1 bis 2 s, das Abkühlen z. B. etwa 0,5 bis 1 s. Das vermengte Kunststoffmaterial der beiden Reagenzbehälter 112b und 112c bildet danach an der Verbindungsstelle 118 einen Steg aus Kunststoff, der die beiden Reagenzbehälter 112b und 112c miteinander verbindet.

Wie weiter unten noch beschrieben wird, kann aufgrund von Maßtoleranzen zwischen den Reagenzbehältern 112a, 112b, 112c ein Spalt 132 vorhanden sein, so dass die Reagenzbehälter 112a, 112b, 112c nicht direkt aneinander anliegen. In diesem Fall fließt durch den Andruck der Sonotrode 130 das verflüssigte Kunststoffmaterial an der Verbindungsstelle 118 in den Spalt zwischen die beiden Reagenzbehälter 112b, 112c und bildet nach dem Erkalten einen Steg, der die beiden Reagenzbehälter 112b, 112c miteinander verbindet und die beiden Behälter 112b, 112c auf einem konstanten Abstand hält. Besonders bei beabstandeten Reagenzbehältern 112a, 112b, 112c sind Materialverdickungen 128 von Vorteil, da ausreichend Material zur Bildung des Stegs zwischen den Reagenzbehältern 112a, 112b, 112c zur Verfügung steht.

Im unteren Bereich der Fig. 3 ist dargestellt, wie die Reagenzbehälter 112a, 112b, 112c alternativ mittels Laserschweißen direkt miteinander verbunden werden können. Mittels einer für Laserlicht L durchlässigen Platte 133, beispielsweise einer Glasplatte 133, wird Druck auf die Reagenzbehälter 112a, 112b, 112c aufgewendet. Laserlicht L wird durch die Glasplatte 133 auf die Verbindungsstelle 118 gestrahlt und das Kunststoffmaterial der Reagenzbehälter 112a, 112b, 112c an den Verbindungsstellen 118 verflüssigt. Analog wie beim Ultraschallschweißen vermengt sich das Material der Reagenzbehälter 112a, 112b, 112c an den Verbindungsstellen 118 durch den von der Platte 133 auf die Verbindungsstellen 118 aufgewendeten Druck. Wenn kein Laserlicht L mehr auf die Verbindungsstellen 118 gestrahlt wird, erkaltet das Kunststoffmaterial und es entstehen jeweils zwei die Reagenzbehälter 112a, 112b, 112c miteinander verbindende Stege.

Genauso wie beim Laserschweißens können während eines Ultraschallschweißvorgangs mehrere Verbindungsstellen erzeugt werden. Beispielsweise könnten mehrere Sonotroden, die genauso wie die zu erzeugenden Schweißpunkte angeordnet sind, gleichzeitig auf einer Seite des zusammengestellten Reagenzbehälterverbunds aufgedrückt werden.

Auch ist es mit besonderen Vorteilen möglich, Reagenzbehälter aus unterschiedlichen Kunststoffmaterialien durch einen entsprechenden Schweißvorgang miteinander zu verbinden. Notwendig ist nur, dass für die zu verbindenden Reagenzbehälter thermoplastisches Kunststoffmaterial verwendet wird. Beispielsweise könnten spritzgegossene Reagenzbehälter aus Polypropylen mit extrusionsgeblasenen Reagenzbehältern aus Polyethylen verschweißt werden.

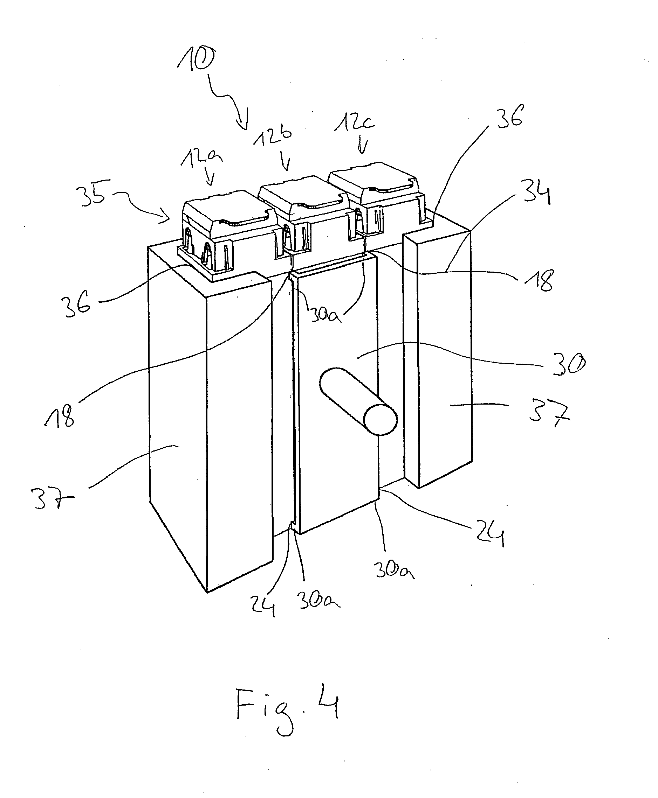

Fig. 4 zeigt den Reagenzbehälterverbund 10 aus Fig. 1 in einer Positionierungseinrichtung 34 während eines Ultraschallschweißvorgangs, bei dem gleichzeitig vier Schweißverbindungen 18, 24 auf einer Seite des Reagenzbehälterverbunds 10 erzeugt werden. Dieser Schweißvorgang ist in ein Herstellungsverfahren eines Reagenzbehälterverbunds eingebettet, das im Folgenden beschrieben wird.

Drei mit unterschiedlichen Reagenzien befüllte Reagenzbehälter 12a, 12b, 12c werden durch einen Transportmechanismus mit Förderband oder durch einen Greifroboter zur Positionierungseinrichtung 34 befördert und in dieser positioniert. In einem ersten Schweißvorgang wird eine Mehrfachsonotrode 30 mit vier Schweißstempeln 30a gegen die Seite des Reagenzbehälterverbunds 10 gedrückt. Die Schweißstempel 30a können jede geeignete Form und somit z. B. einen im Wesentlichen rechteckigen Querschnitt mit abgerundeten Ecken oder alternativ auch einen ovalen Querschnitt aufweisen. Für eine höhere Festigkeit kann auch eine Mehrfachsonotrode mit z. B. sechs bis zehn oder mehr Schweißstempeln verwendet werden.

Die drei Reagenzbehälter 12a, 12b, 12c sind während des Schweißvorgangs aufeinander folgend zwischen zwei Anschlägen 36 der Positionierungseinrichtung 34 angeordnet, wobei ihre der Sonotrode abgewandte Seite an einem Seitenanschlag 35 der Positionierungseinrichtung 34 anliegt und die Reagenzbehälter 12a und 12c an den Längsenden des Reagenzbehälterverbunds 10 von U-förmigen Greifenden 37 der Positioniereinrichtung 34 umgriffen werden. Auf diese Weise sind die Reagenzbehälter 12a, 12b, 12c während des Schweißvorgangs in gut definierten Positionen fixiert.

Nach dem ersten Schweiß- und Abkühlvorgang, die zusammen etwa 2,5 bis 3 Sekunden dauern, wird der Reagenzbehälterverbund 10 durch den Transportmechanismus mit Förderband oder dem Greifroboter zu einer zweiten Positionierungseinrichtung 34 transportiert und mit der bereits verschweißten Seite an dem Seitenanschlag 35 in der zweiten Positionierungseinrichtung 34 angeordnet. Alternativ dazu könnte der Reagenzbehälterverbund 10 auch von dem Greifroboter in der ersten Positionierungseinrichtung 34 um 180° gedreht werden. Dann wird analog dem ersten Schweißvorgang ein zweiter Schweißvorgang durchgeführt, bei dem die andere Seite des Reagenzbehälterverbunds 10 mit der Mehrfachsonotrode 30 verschweißt wird. Nach einem zweiten Abkühlvorgang wird der nun an beiden Seiten verschweißte Reagenzbehälterverbund 10 zu nachgeschalteten Stationen transportiert, an denen beispielsweise eine Etikettierung erfolgt oder ein RFID-Chip am Reagenzbehälterverbund 10 angebracht wird.

Es ist gemäß einer weiteren Verfahrensvariante auch nicht ausgeschlossen, dass die Reagenzbehälter des Reagenzbehälterverbunds von zwei oder mehreren Sonotrodenanordnungen an einander gegenüberliegenden Seiten, z. B. simultan miteinander verschweißt werden.

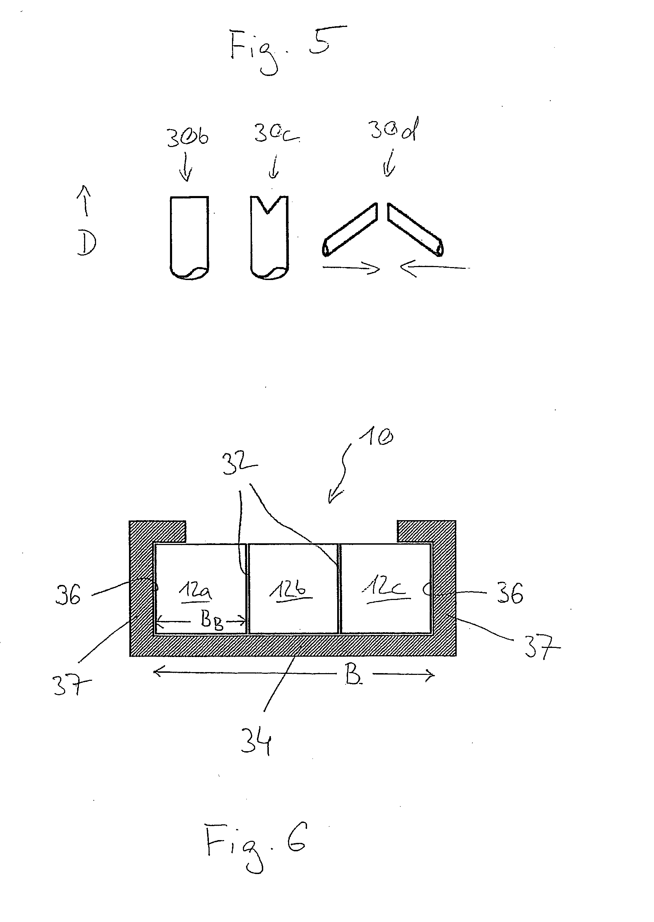

Fig. 5 zeigt weitere mögliche Ausführungsformen möglicher Schweißstempel 30b, 30c, 30d für eine Mehrfach- oder auch eine Einfachsonotrode 30, die in Richtung D auf die Schweißstelle gedrückt werden. Der Schweißstempel 30b weist eine ebene, im Wesentlichen kreisförmige oder ellipsenförmige Schweißfläche auf. Der Schweißstempel 30c ist ähnlich wie der Schweißstempel 30b geformt, weist aber in seinem Endbereich eine V-förmige Vertiefung auf, die das Vermengen des flüssigen Kunststoffmaterials unterstützt. Durch das Andrücken in Richtung D bewirkt die V-förmige Vertiefung, dass das verflüssigte Kunststoffmaterial in Richtung der mittigen Symmetrieebene des Schweißstempels 30c gedrückt wird. Gleiches bewirkt die Sonotrode 30d, die aus zwei Elementen besteht, die sich beim Andrücken in Richtung D aufeinander zu bewegen.

Fig. 6 zeigt einen Querschnitt durch die Positionierungseinrichtung aus der Fig. 4, in der die drei Reagenzbehälter 12a, 12b, 12c angeordnet sind. Wie es weiter oben beschrieben ist, ist es vorteilhaft, wenn der Reagenzbehälterverbund 10 eine definierte Breite B aufweist, so dass das diesen Reagenzbehälterverbund 10 aufnehmende Analysegerät die Öffnungen der Reagenzbehälter 12a, 12c an den Enden des Reagenzbehälterverbunds 10 möglichst exakt positionieren kann.

Um einen Reagenzbehälterverbund 10 mit vordefinierter Breite B zu erzeugen, werden die Reagenzbehälter 12a und 12c derart in der Positionierungseinrichtung 34 angeordnet, dass sie mit einer Seitenfläche an Positionierungsanschlägen 36 der Positionierungseinrichtung 34 anliegen. Die Reagenzbehälter 12a und 12c werden während des Schweißens vorzugsweise an die Positionierungsanschläge 36 angedrückt. Der Reagenzbehälter 12b wird zwischen den beiden Reagenzbehältern 12a, 12c zentriert. Der Abstand zwischen den Positionierungsanschlägen 36 ist auf die Breite B voreingestellt. Die Reagenzbehälter 12a, 12b, 12c besitzen eine herstellungsbedingte Varianz ihrer Breite B_{B}. Die in der Fig. 6 dargestellten Reagenzbehälter 12a, 12b, 12c weisen beispielsweise einen quadratischen Querschnitt mit 28 mm Breite B_{B} auf, mit einer Toleranz von jeweils +/- 0,2 mm. Würden die Reagenzbehälter 12a, 12b, 12c mit aneinanderliegenden Seitenflächen angeordnet, ergäbe sich eine Gesamtbreite B des Reagenzbehälterverbunds 10 von 84 +/- 0,6 mm. Durch das Positionieren der Reagenzbehälter 12a, 12b, 12c in der Positionierungseinrichtung 34 kann nun diese variierende Gesamtbreite B des Reagenzbehälterverbunds 10 ausgeglichen werden.

Allerdings können zwischen den Reagenzbehältern 12a, 12b, 12c dann Spalte 32 vorhanden sein. Wie bereits gesagt, entstehen aber durch den Schweißvorgang an den Verbindungsstellen der Reagenzbehälter 12a, 12b, 12c feste Stege, die die Reagenzbehälter auf den in der Positionierungseinrichtung 34 eingestellten Abstand halten.

Wird im Gegensatz zum eben beschriebenen Verfahren ein Reagenzbehälterverbund ohne exakt vordefinierte Breite erzeugt, ist es vorteilhaft, wenn die aneinanderliegenden Reagenzbehälter während des Schweißens in einer Aufnahme derart angeordnet sind, dass die Schweißstempel möglichst zentral auf die Trennstellen zwischen den zu verbindenden Reagenzbehältern treffen. Dies kann beispielsweise dadurch geschehen, dass bei einem Reagenzbehälterverbund aus drei Regaenzbehältern zuerst der mittlere Reagenzbehälter in der Mitte der Aufnahme angeordnet wird und die beiden äußeren Reagenzbehälter von beiden Seiten angedrückt werden. Alternativ können mehrere Reagenzbehälter durch eine vordefinierte Kraft in Breitenrichtung des Reagenzbehälterverbunds von beiden Seiten zusammengedrückt werden, so dass der Reagenzbehälterverbund in Bezug auf die Sonotrodenanordnung zentriert wird.

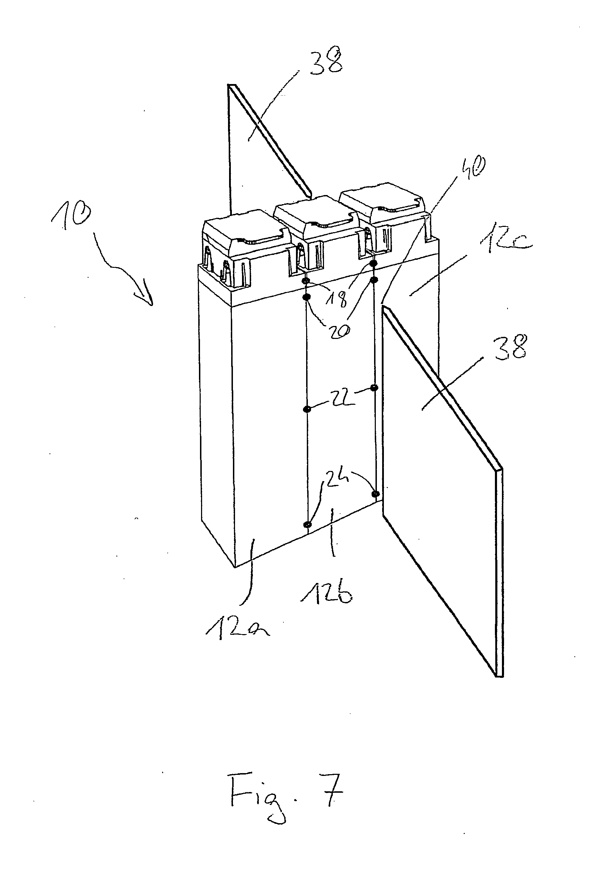

Fig. 7 zeigt, wie vom Reagenzbehälterverbund 10 der Reagenzbehälter 12c wieder automatisch abgetrennt werden kann. Mit einem Messer 38, das an seinem dem Reagenzbehälterverbund 10 zugewandten Ende 40 zugespitzt sein kann, werden die Schweißverbindungen 18, 20, 22, 24 zwischen dem Reagenzbehälter 12b und dem Reagenzbehälter 12c gelöst, indem die dort gebildeten Stege zwischen den beiden Behältern 12b, 12c durch Zerschneiden bzw. Zerbrechen mit der Kante 40 gelöst werden. Das Messer 38 ist beispielsweise ein 1 mm dickes Stahlblech.

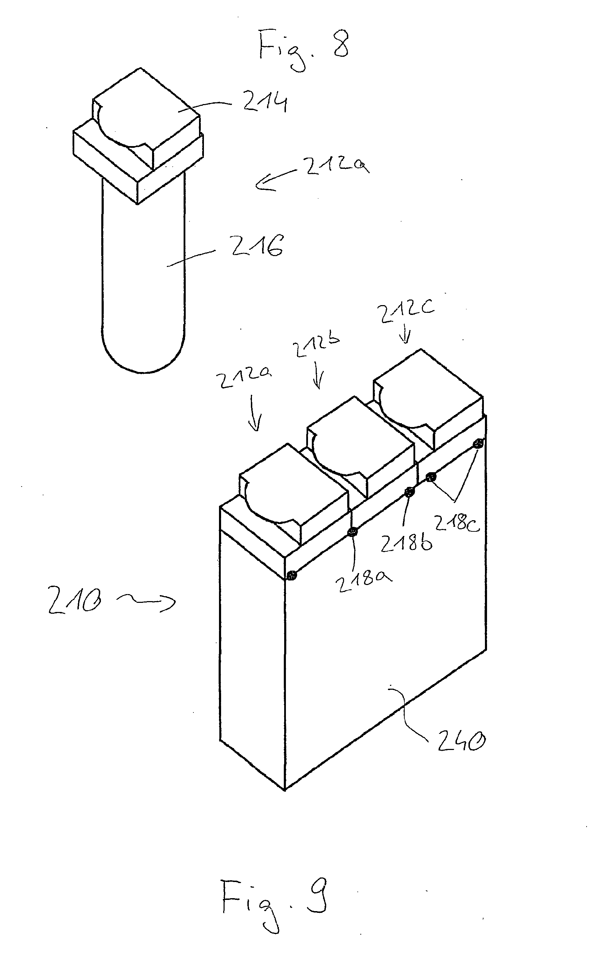

Fig. 8 zeigt eine weitere Ausführungsform eines Reagenzbehälters 212a mit einem Deckelteil 214. Das Unterteil 216 des Reagenzbehälters 212a ist an seinem unteren Ende abgerundet, so dass der Reagenzbehälter 212a nicht eigenständig auf einer ebenen Fläche stehen kann.

In der Fig. 9 ist dargestellt, wie drei derartige Reagenzbehälter 212a, 212b, 212c gemeinsam in einem Ständer oder Bodenkasten 240 angeordnet und mit diesem verschweißt werden können, so dass eine weitere Ausführungsform eines Reagenzbehälterverbunds 210 entsteht, der selbständig auf einer ebenen Unterlage stehen kann. Die Reagenzbehälter 212a und 212b sind dabei an einem gemeinsamen Schweißpunkt 218a miteinander und auch gleichzeitig mit dem Ständer 214 verbunden. Die Reagenzbehälter 212b und 212c wiederum weisen keine gemeinsame Schweißverbindung auf, sondern sind indirekt über die Schweißpunkte 218a, 218b, 218c über den Ständer 240 miteinander verbunden.

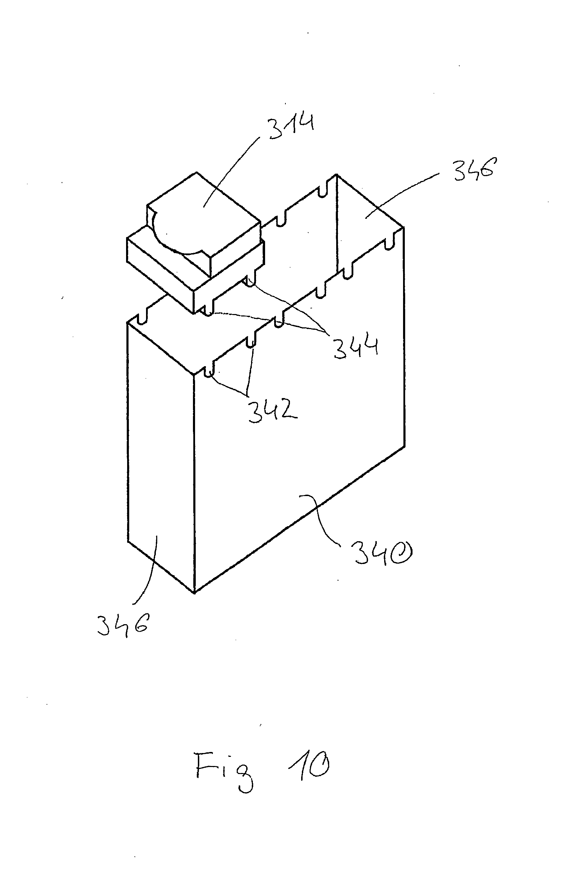

Fig. 10 zeigt, wie ein Ständer 340 gleichzeitig zum Positionieren von Reagenzbehältern verwendet werden kann. Dazu sind im Ständer 340 Vertiefungen 342 vorgesehen, in die Vorsprünge 344 eines Deckelteils 314 eingefügt werden können. Die Vorsprünge 344 und die Aussparungen 342 weisen in Längsrichtung des Reagenzbehälterverbunds die gleiche Breite auf. Somit kann das Deckelteil 314, in dem sich auch die Öffnung des zugehörigen Reagenzbehälters befindet, beim Schweißvorgang nicht mehr in Längsrichtung des Ständers 340 verrutschen. Die Öffnung im Deckelteil 314 ist in Bezug zu den Seitenwänden 346 des Ständers 340 fixiert.

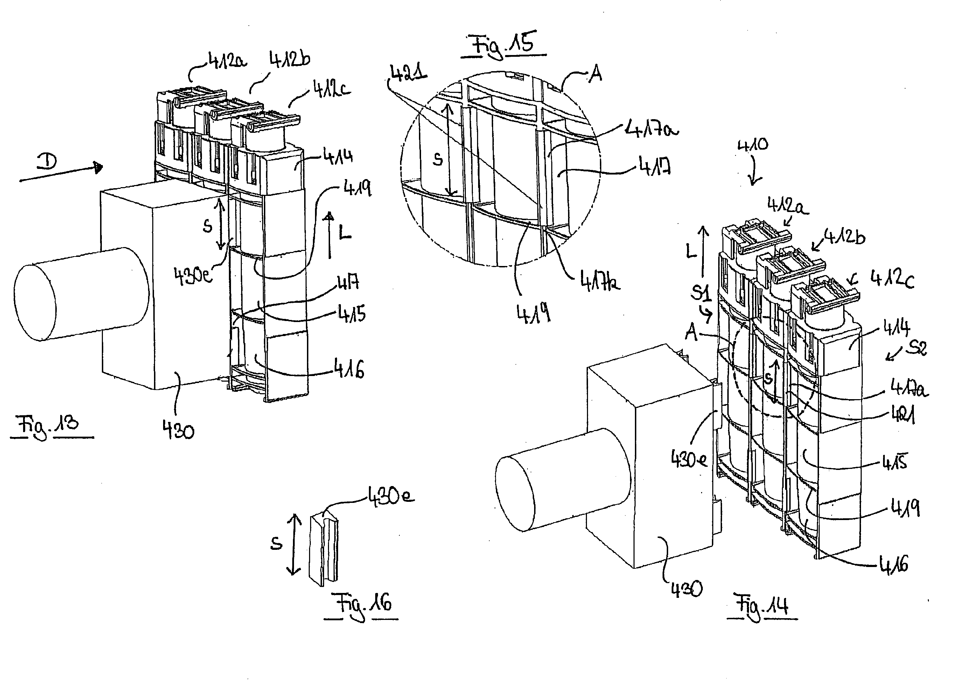

Figur 11 zeigt eine weitere Ausführungsform von Reagenzbehältern 412a, 412b, 412c, die durch Ultraschallschweißen mit einer ebenfalls dargestellten speziellen Mehrfachsonotrode 430 zu einer erfindungsgemäßen Ausführungsform eines Reagenzbehälterverbunds 410 (vgl. Figur 14) verschweißt werden können.

In Figur 11 sind die einzelnen Reagenzbehälter 412a, 412b, 412c noch nicht zu Ultraschallschweissen vorpositioniert sondern mit größerem Abstand voneinander angeordnet, um den Aufbau der einzelnen Behälter besser erkennen zu können. Aus Gründen der Übersichtlichkeit wurden die einzelnen Bestandteile der Reagenzbehälter 412a, 412b, 412c nur an einem der Behälter 412c beispielhaft mit Bezugszeichen versehen. Auch wenn ein Strukturelement mehrfach in einer Figur auftritt, wurden nicht alle einander entsprechenden Strukturelemente mit Bezugszeichen gekennzeichnet.

Die Reagenzbehälter 412a, 412b, 412c weisen jeweils ein Unterteil 416 und ein Deckelteil 414 auf, wobei das Unterteil 416 die eigentliche Reagenzaufnahme 415 sowie zwei einander gegenüberliegende und parallel zueinander verlaufende, plattenförmige Seitenwände 417 umfasst, zwischen denen die Reagenzaufnahme 415 angeordnet ist. Die Seitenwände 417 und die Reagenzaufnahme 415 sind durch mehrere horizontal verlaufende Stabilisierungsstrukturen 419 miteinander verbunden. Reagenzaufnahme 415, Seitenwände 417 und Stabilisierungsstrukturen 419 können einteilig in einem geeigneten Formgebungsverfahren aus Kunststoff hergestellt werden.

Die Seitenwände 417 umfassen jeweils Verbindungswandabschnitte 417a, mit nach aussen hervorstehenden Plattenkanten 417k. Da die Verbindungswandabschnitte 417a nicht direkt in Kontakt mit den Reagenzaufnahmen 415 stehen, können an den Verbindungswandabschnitten 417a benachbarter Reagenzbehälter besonders feste Ultraschallschweißverbindungen hergestellt werden, ohne dass die Gefahr besteht, die Reagenzaufnahme 415 zu beschädigen oder in die Reagenzaufnahme 415 eingefülltes Reagenz zu beeinträchtigen. Insbesondere können befüllte und verdeckelte Reagenzbehälter 412a, 412b, 412c zu einem Reagenzbehälterverbund zusammengefügt werden.

Dazu werden die Reagenzbehälter 412a, 412b, 412c, wie in Figur 12 gezeigt, zunächst so angeordnet, dass Verbindungswandabschnitte 417a jeweils zweier benachbarter Reagenzbehälter 412a und 412b, bzw. 412b und 412c direkt aneinander anliegen oder zumindest mit geringem Abstand parallel zueinander verlaufen.

Wie in Figur 13 illustriert, kann nun die Mehrfachsonotrode 430 so an die Reagenzbehälter in Richtung D angedrückt werden, dass die Schweißstempel 430e der Mehrfachsonotrode 430 jeweils zwei Plattenkanten der aneinander anliegenden bzw. parallel verlaufenden Verbindungswandabschnitte 417a der Seitenwände 417 umgreifen und durch die Kombination von Hochfrequenzschwingungen und Druck miteinander dauerhaft verbinden.

Die Schweißstempel 430, von denen einer in Figur 16 in einer anderen perspektivischen Ansicht und vergrößert dargestellt ist, sind dabei so ausgebildet, dass sie die Verbindungswandabschnitte 417 über eine Strecke s in Längsrichtung L der Reagenzbehälter 412a, 412b, 412c umgreifen und so jeweils eine Schweißnaht 421 der Länge s erzeugen, die in Figur 14 zu erkennen sind, welche den Reagenzbehälterverbund 410 und die Mehrfachsonotrode 430 nach dem Schweißvorgang zeigt. In Figur 15 ist eine Ausschnittvergrößerung des in Figur 14 mit A bezeichneten Bereichs dargestellt, in der die Schweißnähte 421 noch besser zu erkennen sind.

Der Längsendbereich 430a des Schweißstempel 430, der beim Schweißvorgang die Verbindungswandabschnitte 417a umgreift ist dabei, ähnlich wie der Schweißstempel 30c aus Figur 5, in Form eines verrundeten V ausgestaltet. Auf diese Weise werden die Verbindungswandabschnitte 417a dann, wenn der Schweißstempel 430e Druck in Richtung D ausübt, gleichzeitig aufeinander zu gedrückt, was die Verbindungsfestigkeit der Schweißnaht 421 erhöht.

Im dargestellten Beispiel werden benachbarte Reagenzbehälter 412a und 412b bzw. 412b und 412c jeweils durch vier Schweißnähte 421 miteinander verbunden, wobei in den Figuren 11-14 nur die Herstellung von Schweißverbindungen auf einer Seite S1 der Reagenzbehälterverbundes 410 gezeigt ist, diese auf der anderen Seite S2 (etwa nach Drehung des Verbundes um 180°) jedoch auf die gleiche Weise durchgeführt werden können.

Aufgrund der Sonotroden-Anordnung der Mehrfachsonotrode 430 können die drei Reagenzbehälter 412a, 412b, 412c gleichzeitig auf einer der beiden Seiten S1, S2 miteinander verschweißt werden.

In den Figuren 11 bis 14 wurde lediglich aus Gründen der Übersichtlichkeit auf die Darstellung einer Positionierungseinrichtung verzichtet. Hier könnte eine ähnliche Positierungseinrichtung verwendet werden, wie sie beispielsweise in Figur 4 dargestellt ist.

In den vorangehenden Ausführungsbeispielen ist ein Reagenzbehälterverbund mit im Wesentlichen rechteckigen Querschnitt dargestellt, der drei Reagenzbehälter umfasst. Das Verfahren zum Verbinden von Reagenzbehältern mittels Schweißen ist allerdings nicht auf derartige Reagenzbehälterverbunde und die dargestellten Ausführungsformen von Reagenzbehältern beschränkt. Reagenzbehälterverbunde aus zwei bis sechs oder mehr Behältern sind ohne weiteres möglich. Der Reagenzbehälterverbund kann auch einen trapez- oder keilförmigen Querschnitt aufweisen, so wie er speziell für Reagenzrotoren vorteilhaft ist. Auch können ein- und doppelwandige Reagenzbehälter von beliebiger äußerer Gestaltungsform verwendet werden. Beispielsweise könnten Reagenzbehälter mit rundem Querschnitt oder zumindest mit abgerundeten Seitenflächen, die lediglich an einer Linie aneinander anliegen, miteinander verschweißt werden.

## Patentansprüche

1. Verfahren zum Herstellen eines Reagenzbehälterverbunds aus Kunststoff, umfassend:
- Zusammenstellen einer Gruppe bestimmter Reagenzbehälter (412a, 412b, 412c) und
- Dauerhaftes Verbinden der Reagenzbehälter (412a, 412b, 412c) zu dem Reagenzbehälterverbund (410) durch wenigstens einen Ultraschallschweißvorgang, wobei zumindest einer der bestimmten Reagenzbehälter (412a, 412b, 412c) vor dem Verbinden zum Reagenzbehälterverbund (10; 110; 210; 410) mit einem Reagenz befüllt worden ist,
**dadurch gekennzeichnet, dass**
wenigstens zwei miteinander zu verbindende Reagenzbehälter (412a, 412b, 412c) verwendet werden, welche jeweils einen plattenförmigen Verbindungswandabschnitt (417a) mit einer nach außen hervorstehenden Plattenkante (417k) aufweisen, wobei die zwei Reagenzbehälter (412a, 412b, 412c) vor dem Verbinden so angeordnet werden, dass die Verbindungswandabschnitte (417a) zumindest im Bereich der Plattenkanten (417k) aneinander anliegen oder mit geringem Abstand im Wesentlichen parallel zueinander verlaufen, wobei die zwei Reagenzbehälter (412a, 412b, 412c) an ihren Verbindungswandabschnitten durch Ultraschallschweißen mit einer Sonotrode (430) verbunden werden, deren Schweißstempel (430e) die zwei Plattenkanten (417k) der Verbindungswandabschnitte (417a) der zwei Reagenzbehälter (412a, 412b, 412c) beim Schweißvorgang gemeinsam umgreift.

2. Verfahren nach Anspruch 1, **dadurch gekennzeichnet, dass** es vor dem Verbinden der Reagenzbehälter (412a, 412b, 412c) zu dem Reagenzbehälterverbund (10; 110; 210; 410) folgenden weiteren Schritt umfasst:
- Befüllen wenigstens eines anderen der bestimmten Reagenzbehälter (412a, 412b, 412c) mit wenigstens einem anderen Reagenz, welches auf das eine Reagenz kalibriert ist.

3. Verfahren nach Anspruch 2, **dadurch gekennzeichnet, dass** es vor dem Schritt des Befüllens des wenigstens einen anderen Reagenzbehälters (412a, 412b, 412c) folgenden weiteren Schritt umfasst:
- Kalibrieren von dem wenigstens einen anderen Reagenz auf das eine Reagenz.

4. Verfahren nach Anspruch 3, **dadurch gekennzeichnet, dass** es folgende weitere Schritte umfasst:
- Erfassen von Kalibrationsdaten bei dem Kalibrieren von dem wenigstens einen anderen Reagenz auf das wenigstens eine Reagenz;
- Versehen des Reagenzbehälterverbundes (410) mit den Kalibrationsdaten in einer Form, die von einem Verwender oder automatisch von einem Analysensystem auslesbar ist, vorzugsweise in Form eines Barcodes oder RFID-Transponders.

5. Verfahren nach einem der vorhergehenden Ansprüche, **dadurch gekennzeichnet, dass** bei dem Schweißvorgang wenigstens eine punktuelle Schweißverbindung entsteht

6. Verfahren nach einem der vorhergehenden Ansprüche, **dadurch gekennzeichnet, dass** die Reagenzbehälter in einer Positionierungseinrichtung (34) relativ zu Positionierungsanschlägen (36) dieser Positionierungseinrichtung (34) zusammengestellt und miteinander verschweißt werden.

7. Reagenzbehälterverbund (410) aus wenigstens zwei aneinander befestigten und mit bestimmten Reagenzien befüllten Reagenzbehältern (412a, 412b, 412c) aus Kunststoff, wobei die Reagenzbehälter (412a, 412b, 412c) durch wenigstens eine durch Ultraschallschweißen nach Befüllen wenigstens eines Reagenzbehälters mit einem Reagenz hergestellte Schmelzschweißstelle (18, 20, 22, 24, 26; 118; 218a, 218b, 218c; 421) dauerhaft miteinander verbunden sind, **gekennzeichnet, durch** wenigstens zwei miteinander verbundende Reagenzbehälter (412a, 412b, 412c), welche jeweils wenigstens einen plattenförmigen Verbindungswandabschnitt (417a) mit einer nach aussen hervorstehenden Plattenkante (417k) aufweisen, wobei die zwei Reagenzbehälter (412a, 412b, 412c) im Reagenzbehälterverbund mit ihren Verbindungswandabschnitten (417a) zumindest im Bereich der jeweiligen Plattenkanten (417k) aneinander anliegen oder mit geringem Abstand im Wesentlichen parallel zueinander verlaufen und
wobei die zwei Reagenzbehälter (412a, 412b, 412c) an den zwei Verbindungswandabschnitten (417a) **durch** wenigstens eine Schweißverbindung, insbesondere eine Schweißnaht (421) dauerhaft miteinander verbunden sind.

8. Reagenzbehälterverbund nach Anspruch 7, **dadurch gekennzeichnet, dass** die Reagenzbehälter (412a, 412b, 412c) ausschließlich unmittelbar an ihren Außenwänden durch gemeinsame Schmelzschweißstellen (421) verbunden sind.

## Claims

1. Process for the manufacture of a reagent container composite made from plastic material, comprising:
- the juxtaposition of a group of specific reagent containers (412a, 412b, 412c) and
- the permanent joining together of the reagent containers (412a, 412b, 412c) to form the reagent container composite (410) in at least one ultrasonic welding operation, at least one of the specific reagent containers (412a, 412b, 412c) having been filled with reagent prior to the joining together to form the reagent container composite (10; 110; 210; 410),
**characterized in that**
at least two of the reagent containers (412a, 412b, 412c) to be joined together each have a plate-like connecting wall portion (417a) with an outwards jutting plate edge (417k), the two reagent containers (412a, 412b, 412c) being arranged prior to joining with their connecting wall portions (417a) at least in the region of the plate edges (417k) in contact with each other or extending substantially parallel with each other and a small distance apart, the two reagent containers (412a, 412b, 412c) being joined at their connecting wall portions by ultrasonic welding with a sonotrode (430) whose welding die (430e) reaches around the two plate edges (417k) of the connecting wall portions (417a) of the two reagent containers (412a, 412b, 412c) during the welding operation.

2. Process according to Claim 1, **characterized in that** it includes the following further step prior to the joining together of the reagent containers (412a, 412b, 412c) to form the reagent container composite (10; 110; 210; 410):
- filling of at least one other of the specific reagent containers (412a, 412b, 412c) with at least one other reagent which is calibrated to the one reagent.

3. Process according to Claim 2, **characterized in that** it includes the following further step prior to the step of filling the at least one other reagent container (412a, 412b, 412c):
- calibration of the at least one other reagent to the one reagent.

4. Process according to Claim 3, **characterized in that** it includes the following further steps:
- recording calibration data upon calibration of the at least one other reagent to the at least one reagent;
- tagging the reagent container composite (410) with the calibration data in a form which can be read by a user or read automatically by an analysis system, preferably in the form of a barcode or RFID transponder.

5. Process according to any one of the preceding claims, **characterized in that** at least one spot-welded joint is made in the welding operation.

6. Process according to any one of the preceding claims, **characterized in that** the reagent containers are juxtaposed in a positioning device (34) relative to positioning stops (36) of this positioning device (34), and welded together.

7. Reagent container composite (410) consisting of at least two reagent containers (412a, 412b, 412c) made from plastic material that have been attached to each other and filled with specific reagents, the reagent containers (412a, 412b, 412c) being permanently joined together by at least one fusion weld (18, 20, 22, 24, 26; 118; 218a, 218b, 218c; 421) produced by ultrasonic welding after at least one reagent container has been filled with reagent, **characterized by** at least two joined-together reagent containers (412a, 412b, 412c) each having at least one plate-like connecting wall portion (417a) with an outwards jutting plate edge (417k), the two reagent containers (412a, 412b, 412c) in the reagent container composite having their connecting wall portions (417a) at least in the region of the respective plate edges (417k) in contact with each other or extending substantially parallel with each other and a small distance apart, and the two reagent containers (412a, 412b, 412c) being permanently joined together at their two connecting wall portions (417a) by at least one welded joint, in particular a seam weld (421).

8. Reagent container composite according to Claim 7, **characterized in that** the reagent containers (412a, 412b, 412c) are joined only immediately at their outer walls by fusion welds (421).

## Revendications

1. Procédé de fabrication d'un ensemble de récipients de réactifs, en matière plastique, consistant :
- à constituer un groupe de récipients de réactifs déterminés (412a, 412b, 412c) et
- à assembler de façon permanente les récipients de réactifs (412a, 412b, 412c), pour former l'ensemble de récipients de réactifs (410) par au moins un processus de soudage par ultrasons, où au moins l'un des récipients de réactifs déterminés (412a, 412b, 412c) a été rempli d'un réactif avant l'assemblage, pour former l'ensemble de récipients de réactifs (10; 110; 210; 410),
**caractérisé**
**en ce qu'**au moins deux récipients de réactifs (412a, 412b, 412c) à assembler l'un à l'autre sont utilisés, récipients de réactifs qui présentent respectivement une partie de paroi d'assemblage (417a), en forme de plaque, comportant une arête de plaque (417k) en saillie vers l'extérieur, où les deux récipients de réactifs (412a, 412b, 412c) sont disposés, avant l'assemblage, de manière telle que les parties de parois d'assemblage (417a) soient en appui les unes contre les autres au moins dans la zone des arêtes de plaques (417k) ou bien s'étendent à faible distance, sensiblement de façon parallèle entre elles, où les deux récipients de réactifs (412a, 412b, 412c) sont assemblés, au niveau de leurs parties de parois d'assemblage, par soudage par ultrasons avec une sonotrode (430) dont l'étampe de soudage (430e) entoure en commun, lors du processus de soudage, les deux arêtes de plaque (417k) des parties de parois d'assemblage (417a) des deux récipients de réactifs (412a, 412b, 412c).

2. Procédé selon la revendication 1, **caractérisé en ce qu'**il comprend, avant l'assemblage des récipients de réactifs (412a, 412b, 412c) pour former l'ensemble des récipients de réactifs (10; 110; 210; 410), l'autre étape suivante :
- le remplissage d'au moins un autre des récipients de réactifs déterminés (412a, 412b, 412c) avec au moins un autre réactif qui est étalonné sur l'un des réactifs.

3. Procédé selon la revendication 2, **caractérisé en ce qu'**il comprend, avant l'étape du remplissage de l'au moins un autre récipient de réactif (412a, 412b, 412c), l'autre étape suivante :
- l'étalonnage de l'au moins un autre réactif, sur l'un des réactifs.

4. Procédé selon la revendication 3, **caractérisé en ce qu'**il comprend les autres étapes suivantes consistant :
- à déterminer des données d'étalonnage lors de l'étalonnage de l'au moins un autre réactif, sur l'au moins un réactif ;
- à doter l'ensemble de récipients de réactifs (410) des données d'étalonnage sous une forme qui peut être lue par un utilisateur ou automatiquement par un système d'analyse, de préférence sous la forme d'un code-barres ou d'un transpondeur RFID.

5. Procédé selon l'une quelconque des revendications précédentes, **caractérisé en ce qu'**il se forme, au cours du processus de soudage, au moins un joint soudé ponctuel.

6. Procédé selon l'une quelconque des revendications précédentes, **caractérisé en ce que** les récipients de réactifs sont regroupés dans un dispositif de positionnement (34), par rapport à des butées de positionnement (36) de ce dispositif de positionnement (34), et soudés entre eux.

7. Ensemble de récipients de réactifs (410) se composant d'au moins deux récipients de réactifs (412a, 412b, 412c), en matière plastique, fixés l'un contre l'autre et remplis de réactifs déterminés, où les récipients de réactifs (412a, 412b, 412c) sont assemblés l'un à l'autre de façon permanente, par au moins un point de soudure par fusion (18, 20, 22, 24, 26; 118; 218a, 218b, 218c; 421) réalisé par soudage par ultrasons, après remplissage, avec un réactif, d'au moins un récipient de réactif,
**caractérisé par** au moins deux récipients de réactifs (412a, 412b, 412c) assemblés l'un à l'autre, qui présentent respectivement au moins une partie de paroi d'assemblage (417a), en forme de plaque, comportant une arête de plaque (417k) en saillie vers l'extérieur,
où les deux récipients de réactifs (412a, 412b, 412c) sont en appui l'un contre l'autre au moins dans la zone des arêtes de plaques respectives (417k), par leurs parties de parois d'assemblage (417a) dans l'ensemble de récipients de réactifs ou bien s'étendent à faible distance, sensiblement de façon parallèle entre eux et
où les deux récipients de réactifs (412a, 412b, 412c) sont assemblés l'un à l'autre de façon permanente, par au moins un joint soudé, en particulier un cordon de soudure (421), au niveau des deux parties de parois d'assemblage (417a).

8. Ensemble de récipients de réactifs selon la revendication 7, **caractérisé en ce que** les récipients de réactifs (412a, 412b, 412c) sont assemblés exclusivement par des points de soudure par fusion communs (421), directement au niveau de leurs parois extérieures.
